# EUROPEAN PATENT SPECIFICATION

(11) **EP 3 731 122 B1**
(45) Date of publication and mention of the grant of the patent: **01.09.2021**
(21) Application number: 18901608.2
(22) Date of filing: 17.01.2018
(51) Int. Cl.: G06F 21/55, G06N 5/02, H04L 29/06

(54) **ATTACK DETECTION APPARATUS, ATTACK DETECTION METHOD, AND ATTACK DETECTION PROGRAM**
GERÄT ZUR ANGRIFFSERKENNUNG, ANGRIFFSDETEKTIONSVERFAHREN UND ANGRIFFSDETEKTIONSPROGRAMM
APPAREIL DE DÉTECTION D'ATTAQUE, PROCÉDÉ DE DÉTECTION D'ATTAQUE ET PROGRAMME DE DÉTECTION D'ATTAQUE

(43) Date of publication of application: 28.10.2020
(73) Proprietor: Mitsubishi Electric Corporation, Tokyo 100-8310 (JP)
(72) Inventor: NAKAI, Tsunato, Tokyo 100-8310 (JP); ICHIKAWA, Sachihiro, Tokyo 100-8310 (JP)
(74) Representative: Mewburn Ellis LLP
(86) International application number: PCT/JP2018/001223
(87) International publication number: WO 2019/142264

(56) References cited:
- WO-A1-2014/155650
- JP-A- 2010 191 556
- JP-A- 2015 103 218
- US-A1- 2016 085 237
- US-A1- 2017 264 629

## Description

### Technical Field

The present invention relates to a technology for detecting a cyberattack.

### Background Art

Recently, the number of cases in which control systems are connected to networks is increasing, and the number of cases in which control systems are targets of cyberattacks is increasing.

Therefore, in order to detect an attack by a cyberattack, consideration has been given to installing an attack detection function in an apparatus such as a monitoring control apparatus.

An existing attack detection function defines a detection rule taking advantage of fixedness of network communication of a control system. In the detection rule, information on communication to be allowed, such as a pair of a transmission source address and a transmission destination address and a protocol, is written.

As countermeasures against an attack made with a normal communication combination and an attack made by an unauthorized operation by an operator, a detection system focusing on a system state has been developed.

WO 2014/155650 Alproposes using a packet that notifies a system state, so as to check a normal communication pattern corresponding to the system state.

US 2016/085237 A1 discloses an information controller, an information control system, and an information control method. US 2017/0264629 A1 discloses a production process knowledge-based intrusion detection for industrial control systems.

### Summary of Invention

### Technical Problem

In the proposal of WO 2014/155650 A1, a state notification packet is transmitted from a server device and a controller, and a system state is thereby recognized. Then, an intrusion and an attack are detected based on a communication pattern corresponding to the system state.

That is, a function of transmitting a state notification packet needs to be incorporated into the server device and the controller.

Therefore, the introduction of the technology proposed in WO 2014/155650 A1 is difficult in that addition or modification of a function is required in the system as a whole.

It is an object of the present invention to allow a cyberattack to be detected even without receiving a state notification.

### Solution to Problem

The object is solved by the subject-matter of the independent claims. The dependent claims describe preferred embodiments of the invention.

### Advantageous Effects of Invention

According to the present invention, a state model is generated, so that a cyberattack can be detected without receiving a state notification.

### Brief Description of Drawings

Fig. 1 is a configuration diagram of a monitoring control system 200 according to a first embodiment;
Fig. 2 is a diagram illustrating a specific example of the monitoring control system 200 according to the first embodiment;
Fig. 3 is a configuration diagram of a monitoring control apparatus 100 according to the first embodiment;
Fig. 4 is a diagram illustrating a storage unit 121 according to the first embodiment;
Fig. 5 is a flowchart of a monitoring control method (input) according to the first embodiment;
Fig. 6 is a flowchart of a monitoring control method (receiving) according to the first embodiment;
Fig. 7 is a flowchart of an attack detection method according to the first embodiment;
Fig. 8 is a flowchart of a generation process (S210) according to the first embodiment;
Fig. 9 is a diagram illustrating an example of a plot graph 141 according to the first embodiment;
Fig. 10 is a diagram illustrating an example of a linear model 142 according to the first embodiment;
Fig. 11 is a diagram illustrating an example of a state model 134 according to the first embodiment;
Fig. 12 is a diagram illustrating an example of a detection rule 135 according to the first embodiment;
Fig. 13 is a diagram illustrating an example of the detection rule 135 according to the first embodiment;
Fig. 14 is a diagram illustrating an example of the detection rule 135 according to the first embodiment;
Fig. 15 is a diagram illustrating an example of the state model 134 according to the first embodiment;
Fig. 16 is a flowchart of an attack detection process (S230) according to the first embodiment;
Fig. 17 is a flowchart of an attack detection method according to a second embodiment;
Fig. 18 is a flowchart of a generation process (S300) according to the second embodiment;
Fig. 19 is a diagram illustrating an example of a communication information list 136 according to the second embodiment;
Fig. 20 is a flowchart of a detection rule generation process (S320) according to the second embodiment; and
Fig. 21 is a hardware configuration diagram of the monitoring control apparatus 100 according to the embodiments.

### Description of Embodiments

In the embodiments and drawings, the same elements or corresponding elements are denoted by the same reference sign. Description of elements denoted by the same reference sign will be suitably omitted or simplified. Arrows in the drawings mainly indicate flows of data or flows of processing.

### First Embodiment

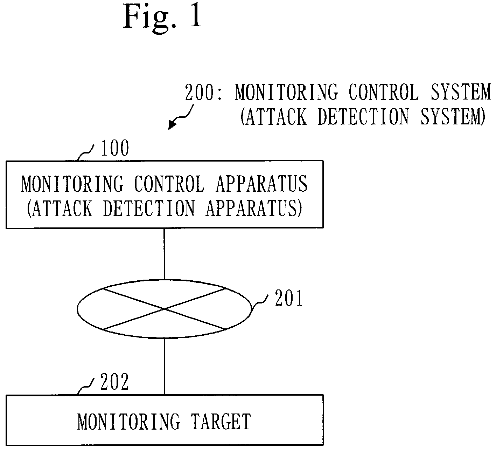

Referring to Figs. 1 to 16, an embodiment for detecting a cyberattack will be described.

### *** Description of Configuration ***

Referring to Fig. 1, a configuration of a monitoring control system 200 will be described.

The monitoring control system 200 is a system that monitors a monitoring target 202 and controls the monitoring target 202.

The monitoring control system 200 includes a monitoring control apparatus 100 and the monitoring target 202.

The monitoring control apparatus 100 and the monitoring target 202 communicate with each other via a network 201.

Specifically, the monitoring control apparatus 100 transmits, to the monitoring target 202, a control value for controlling the monitoring target 202. The monitoring target 202 operates in accordance with the control value. A plurality of sensors are installed in the monitoring target 202, and various measurements are carried out with the plurality of sensors. The monitoring target 202 transmits various measurement values obtained by the various measurements to the monitoring control apparatus 100.

A specific example of the monitoring target 202 is a plant 210.

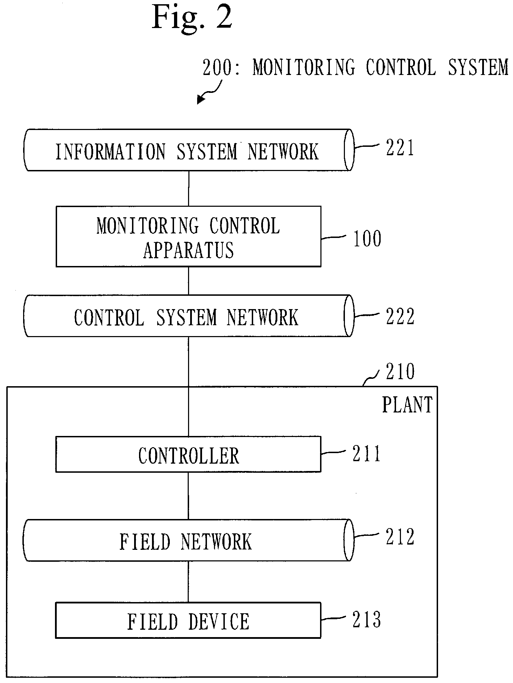

Referring to Fig. 2, a configuration of the monitoring control system 200 in which the monitoring target 202 is the plant 210 will be described.

In Fig. 2, the monitoring control system 200 includes the monitoring control apparatus 100 and the plant 210.

The monitoring control apparatus 100 is connected to an information system network 221 and a control system network 222, and the plant 210 is connected to the control system network 222.

The information system network 221 is a network used in an office.

The control system network 222 is a network through which control values and measurement values are communicated.

The plant 210 includes a controller 211, a field network 212, and a field device 213.

The field network 212 is a network for communicating control values and measurement values between the controller 211 and the field device 213.

Referring back to Fig. 1, the description of the monitoring control system 200 will be continued.

The monitoring control apparatus 100 has a function of detecting an attack against the monitoring control system 200. That is, the monitoring control apparatus 100 further functions as an attack detection apparatus. The monitoring control system 200 further functions as an attack detection system.

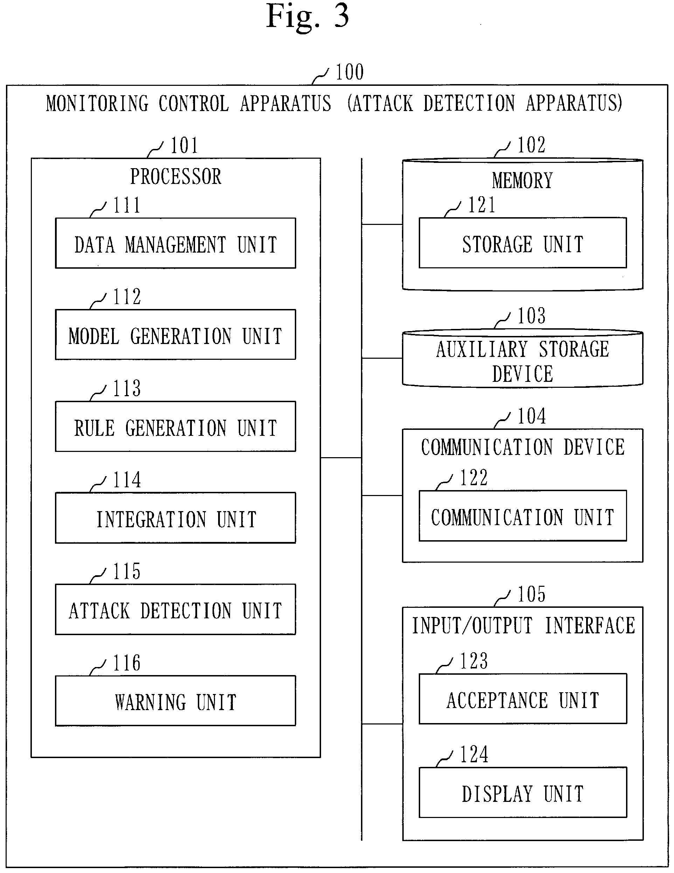

Referring to Fig. 3, a configuration of the monitoring control apparatus 100 will be described.

The monitoring control apparatus 100 is a computer that includes hardware, such as a processor 101, a memory 102, an auxiliary storage device 103, a communication device 104, and an input/output interface 105. These hardware components are connected with each other via signal lines.

The processor 101 is an integrated circuit (IC) that performs arithmetic processing and controls other hardware components. For example, the processor 101 is a central processing unit (CPU), a digital signal processor (DSP), or a graphics processing unit (GPU).

The memory 102 is a volatile storage device. The memory 102 is also referred to as a main storage device or a main memory. For example, the memory 102 is a random-access memory (RAM). Data stored in the memory 102 is kept in the auxiliary storage device 103 as necessary.

The auxiliary storage device 103 is a non-volatile storage device. For example, the auxiliary storage device 103 is a read-only memory (ROM), a hard disk drive (HDD), or a flash memory. Data stored in the auxiliary storage device 103 is loaded into the memory 102 as necessary.

The communication device 104 is a receiver and a transmitter. For example, the communication device 104 is a communication chip or a network interface card (NIC).

The input/output interface 105 is a port to which an input device and an output device are connected. For example, the input/output interface 105 is a USB terminal, the input device is a keyboard and a mouse, and the output device is a display. USB is an abbreviation for Universal Serial Bus.

The monitoring control apparatus 100 includes elements, such as a data management unit 111, a model generation unit 112, a rule generation unit 113, an integration unit 114, an attack detection unit 115, and a warning unit 116. These elements are realized by software.

The auxiliary storage device 103 stores a monitoring control program for causing a computer to function as the data management unit 111.

Further, the auxiliary storage device 103 stores an attack detection program for causing the computer to function as the model generation unit 112, the rule generation unit 113, the integration unit 114, the attack detection unit 115, and the warning unit 116.

The monitoring control program and the attack detection program are loaded into the memory 102 and executed by the processor 101.

Further, the auxiliary storage device 103 stores an operating system (OS). At least part of the OS is loaded into the memory 102 and executed by the processor 101.

That is, the processor 101 executes the monitoring control program and the attack detection program while executing the OS.

Data obtained by executing the monitoring control program or the attack detection program is stored in a storage device, such as the memory 102, the auxiliary storage device 103, a register in the processor 101, or a cache memory in the processor 101.

The memory 102 functions as a storage unit 121. However, any of the other storage devices may function as the storage unit 121, in place of the memory 102 or together with the memory 102.

The communication device 104 functions as a communication unit 122.

The input/output interface 105 functions as an acceptance unit 123 and a display unit 124.

The storage unit 121, the communication unit 122, the acceptance unit 123, and the display unit 124 are controlled by the monitoring control program and the attack detection program. That is, each of the monitoring control program and the attack detection program further causes the computer to function as the storage unit 121, the communication unit 122, the acceptance unit 123, and the display unit 124.

The monitoring control apparatus 100 may include a plurality of processors as an alternative to the processor 101. The plurality of processors divide the role of the processor 101 among the plurality of processors.

The monitoring control program and the attack detection program can be computer-readably recorded (stored) in a non-volatile storage medium, such as an optical disc or a flash memory.

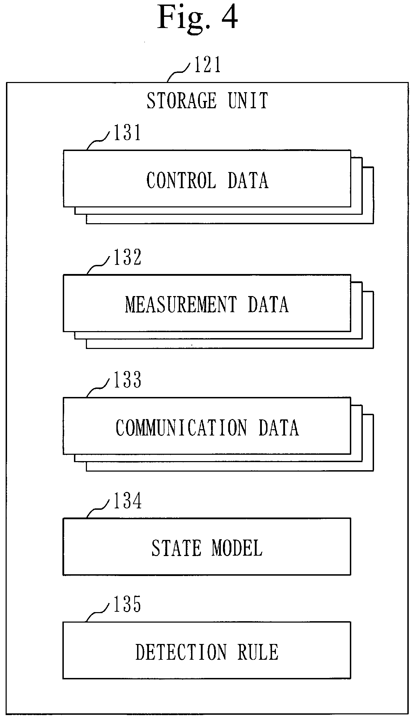

Referring to Fig. 4, main types of data to be stored in the storage unit 121 will be described.

The storage unit 121 mainly stores control data 131, measurement data 132, communication data 133, a state model 134, and a detection rule 135.

The control data 131 is data that includes a control value.

The measurement data 132 is data that includes a measurement value.

The communication data 133 is data communicated by the monitoring target 202.

The state model 134 and the detection rule 135 are used to detect attack data. The attack data is communication data 133 for attacking the monitoring control system 200.

### *** Description of Operation ***

Operation of the monitoring control apparatus 100 is equivalent to a monitoring control method and an attack detection method. A procedure for the monitoring control method is equivalent to a procedure for a monitoring control program, and a procedure for the attack detection method is equivalent to a procedure for an attack detection program.

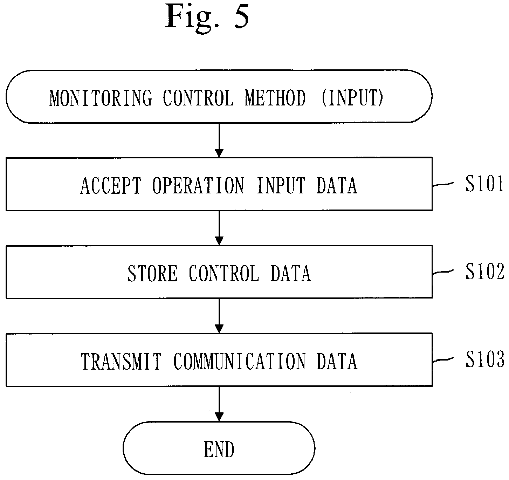

Referring to Fig. 5, a monitoring control method (input) will be described.

The monitoring control method (input) is a procedure applicable when operation input data is input to the monitoring control apparatus 100.

The operation input data includes a control type and a control value.

The control type is a type of control for the monitoring target 202. Examples of control types for the plant 210 are pressure and the opening and closing of a valve.

The control value is a target value of control for the monitoring target 202. Examples of control values for the plant 210 are a target value of pressure and a target value of a valve opening degree.

In step S101, the acceptance unit 123 accepts operation input data that is input to the monitoring control apparatus 100.

In step S102, the data management unit 111 generates control data 131 based on the operation input data, and stores the generated control data 131 in the storage unit 121.

The control data 131 includes a control type, a control value, and a time.

In step S103, the data management unit 111 generates communication data 133 including a control value. Then, the communication unit 122 transmits the communication data 133 to the monitoring target 202.

The data management unit 111 stores the generated communication data 133 in the storage unit 121.

The monitoring control method (input) of Fig. 5 is performed each time operation input data is input to the monitoring control apparatus 100.

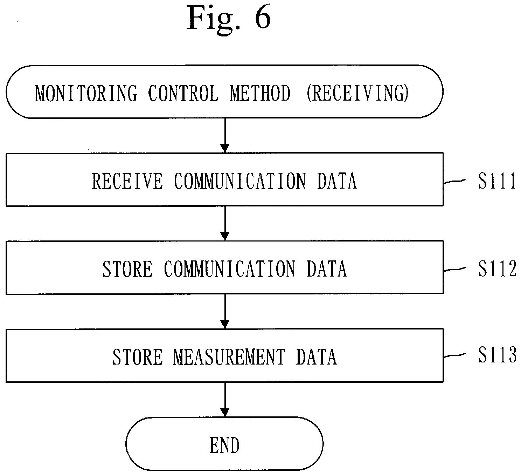

Referring to Fig. 6, a monitoring control method (receiving) will be described.

The monitoring control method (receiving) is a procedure applicable when communication data 133 reaches the monitoring control apparatus 100 from the monitoring target 202.

The communication data 133 from the monitoring target 202 includes a measurement type and a measurement value.

The measurement type is a type of measurement for the monitoring target 202. Examples of measurement types for the plant 210 are pressure and the opening and closing of a valve.

The measurement value is a value obtained by measuring the monitoring target 202. Examples of measurement values in the plant 210 are pressure and a valve opening degree.

In step S111, the communication unit 122 receives communication data 133 that has reached the monitoring control apparatus 100.

In step S112, the data management unit 111 stores the communication data 133 in the storage unit 121.

In step S113, the data management unit 111 generates measurement data 132 based on the communication data 133, and stores the generated measurement data 132 in the storage unit 121.

The measurement data 132 includes a measurement type, a measurement value, and a time.

The monitoring control method (receiving) of Fig. 6 is performed every time communication data 133 reaches the monitoring control apparatus 100 from the monitoring target 202.

A monitoring control method (display) will be described.

In the monitoring control method (display), the data management unit 111 reads control data 131 and measurement data 132 from the storage unit 121, and inputs the control data 131 and the measurement data 132 to the display unit 124. Then, the display unit 124 displays the control data 131 and the measurement data 132 on a display.

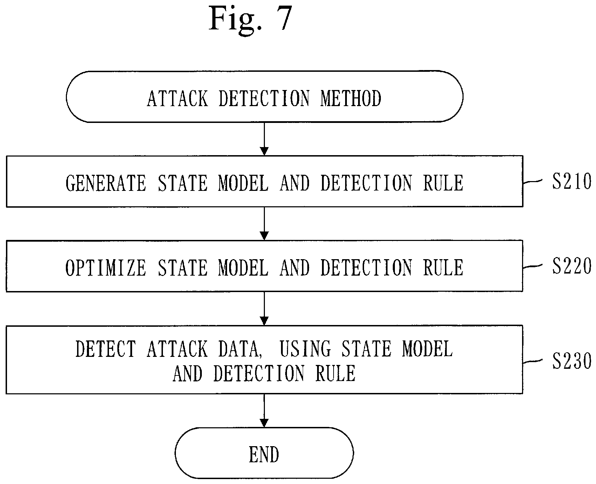

Referring to Fig. 7, the attack detection method will be described.

In step S210, the model generation unit 112 generates a state model 134 based on a plurality of control values and a plurality of measurement values.

The state model 134 indicates pairs of values in each state of the monitoring target 202.

A pair of values is a set of a control value and a measurement value.

Specifically, the model generation unit 112 generates the state model 134 as described below.

The model generation unit 112 divides a plurality of pairs of values obtained from the plurality of control values and the plurality of measurement values into groups, and defines a state for each of the groups.

In step S210, the rule generation unit 113 generates a detection rule 135 based on pieces of communication data 133 communicated by the monitoring target 202 in a time period during which the plurality of control values and the plurality of measurement values are obtained.

The detection rule 135 indicates communication information of the monitoring target 202 in each state. The communication information will be described later.

Specifically, the rule generation unit 113 generates the detection rule 135 as described below.

First, the rule generation unit 113 obtains a state from the state model 134 based on a pair of values of the time when each piece of communication data 133 of the pieces of communication data 133 is obtained.

Further, the rule generation unit 113 obtains communication information from each piece of communication data 133.

Then, the rule generation unit 113 registers the obtained state and the obtained communication information in the detection rule 135 in association with each other.

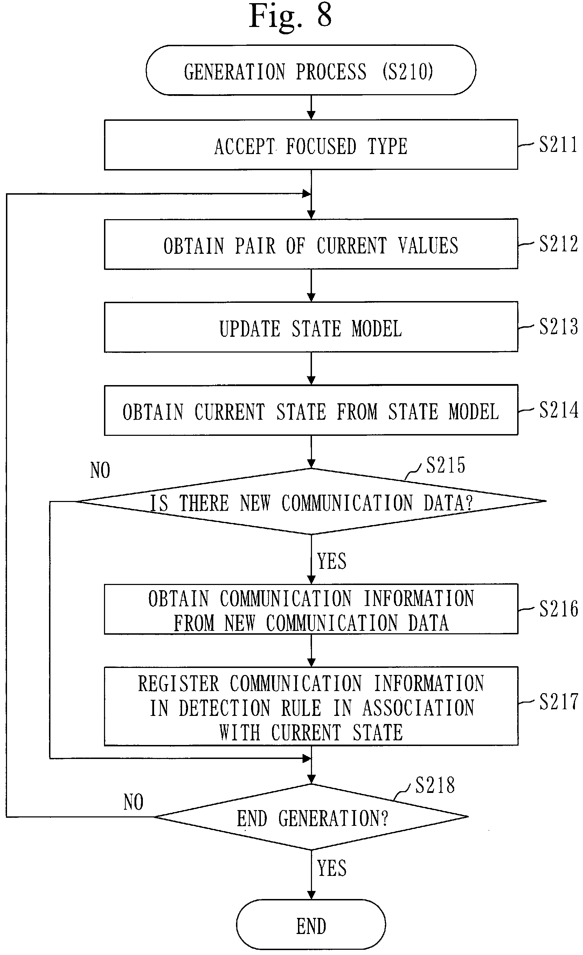

Referring to Fig. 8, a procedure for a generation process (S210) will be described.

In step S211, an operator decides a focused type and inputs the focused type to the monitoring control apparatus 100.

Then, the acceptance unit 123 accepts the focused type that is input to the monitoring control apparatus 100.

The focused type is a type to be referred to in order to generate the state model 134 and the detection rule 135.

Steps S212 to S218 are performed repeatedly.

In step S212, the model generation unit 112 obtains a pair of current values of the focused type from the storage unit 121.

Specifically, the model generation unit 112 obtains the pair of current values of the focused type as described below.

The model generation unit 112 selects pieces of control data 131 including the same control type as the focused type, and selects the most recent piece of control data 131 from the selected pieces of control data 131. Then, the control data 131 obtains a control value from the most recent piece of control data 131 that has been selected.

Further, the model generation unit 112 selects pieces of measurement data 132 including the same measurement type as the focused type, and selects the most recent piece of measurement data 132 from the selected pieces of measurement data 132. Then, the measurement data 132 obtains a measurement value from the most recent piece of measurement data 132 that has been selected.

A set of the obtained control value and the obtained measurement value is the pair of current values of the focused type.

In step S213, the model generation unit 112 updates the state model 134 based on the pair of current values of the focused type.

Specifically, the model generation unit 112 updates the state model 134 as described below.

First, the model generation unit 112 plots the pair of current values of the focused type on a plot graph 141.

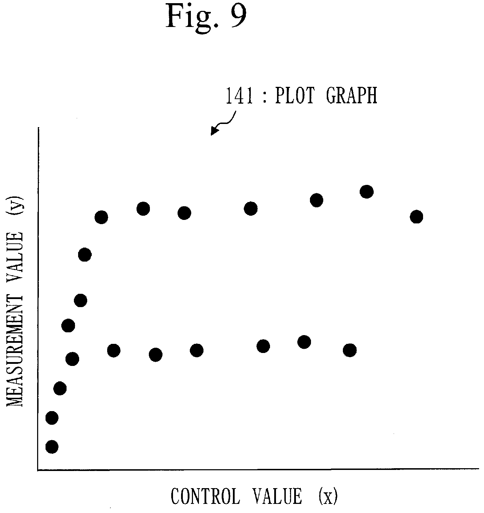

Fig. 9 illustrates an example of the plot graph 141.

The plot graph 141 is a graph on which one or more pairs of values are plotted. The horizontal axis indicates control values and the vertical axis indicates measurement values.

Next, the model generation unit 112 updates a linear model 142 based on the plot graph 141.

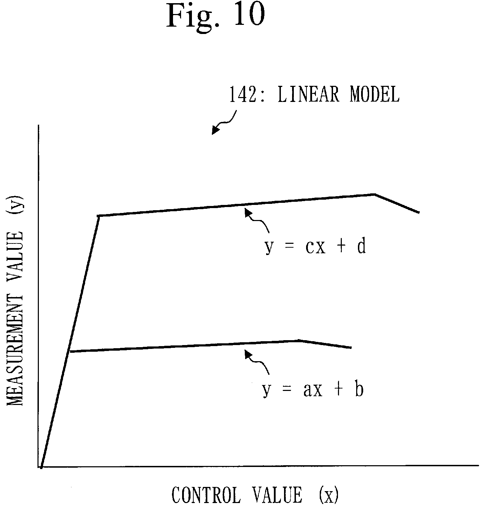

Fig. 10 illustrates an example of the linear model 142.

The linear model 142 is one or more line graphs corresponding to the plot graph 141.

In Fig. 10, the linear model 142 includes two line graphs. Each line graph is defined by an equation. For example, a first line graph is defined by an equation "y = ax + b", and a second line graph is defined by an equation "y = cx + d".

The model generation unit 112 updates the state model 134 based on the linear model 142.

Specifically, the model generation unit 112 divides the range of pairs of values included in the linear model 142 into a plurality of ranges and defines a state for each of the ranges.

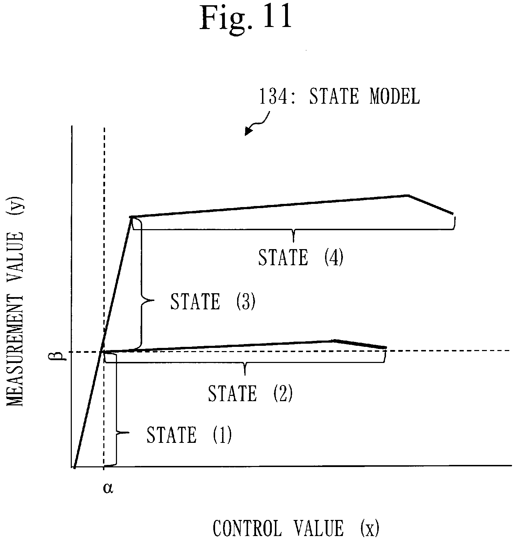

Fig. 11 illustrates an example of the state model 134.

In Fig. 11, the state model 134 includes four states.

The range of a state (1) is a range such that the control value is less than α and the measurement value is less than β.

The range of a state (2) is a range such that the control value is more than α and the measurement value is less than β.

The range of a state (3) is a range such that the control value is less than α and the measurement value is less than β.

The range of a state (4) is a range such that the control value is more than α and the measurement value is more than β.

Referring back to Fig. 8, the description will be continued from step S214.

In step S214, the rule generation unit 113 obtains a current state from the state model 134.

Specifically, the rule generation unit 113 selects a range to which the pair of current values of the focused type belongs from the state model 134, and obtains a state defined for the selected range from the state model 134. The obtained state is the current state.

In step S215, the rule generation unit 113 determines whether there is new communication data 133.

New communication data 133 in the initial step S215 is communication data 133 including a time that is after start of the generation process (S210).

New communication data 133 in the second or subsequent step S215 is communication data 133 including a time that is after the previous step S215.

If there is new communication data 133, the process proceeds to step S216.

If there is no new communication data 133, the process proceeds to step S218.

In step S216, the rule generation unit 113 obtains communication information from the new communication data 133.

Specifically, the communication data 133 has a header in which communication information is set. The rule generation unit 113 obtains the communication information from the header of the communication data 133.

In step S217, the rule generation unit 113 registers the communication information in the detection rule 135 in association with the current state.

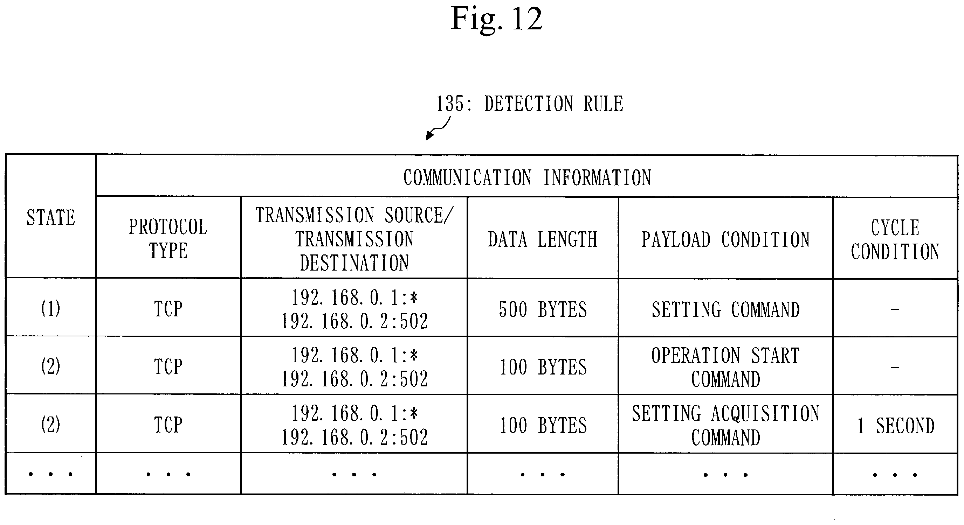

Fig. 12 illustrates an example of the detection rule 135.

In the detection rule 135, a state and communication information are associated with each other.

The communication information is information that indicates characteristics of communication.

In Fig. 12, the communication information includes a protocol type, a transmission source/transmission destination, a data length, a payload condition, and a cycle condition.

The protocol type identifies a communication protocol.

The transmission source/transmission destination is a pair of a transmission source address and a transmission destination address.

The data length is a payload size.

The payload condition indicates a command type, a range of a setting value, or the like.

The cycle condition indicates a cycle at which communication data 133 of the same type occurs.

Referring back to Fig. 8, the description will be continued from step S218.

In step S218, the model generation unit 112 determines whether to end the generation process (S210).

For example, the model generation unit 112 determines to end the generation process (S210) based on elapsing of a predetermined processing time, input of a generation end command to the monitoring control apparatus 100, completion of an operation time period of the monitoring target 202, or the like.

If the generation process (S210) is not to be ended, the process proceeds to step S212.

Referring back to Fig. 7, the description will be continued from step S220.

In step S220, the integration unit 114 optimizes the state model 134 and the detection rule 135.

Specifically, if there are a plurality of states having matching communication information with respect to each other in the detection rule 135, the integration unit 114 integrates the plurality of states into one state in each of the state model 134 and the detection rule 135.

A procedure for an integration process (S220) will be described.

First, the integration unit 114 determines whether there are a plurality of states having matching communication information with respect to each other in the detection rule 135. The plurality of states having matching communication information with respect to each other will be referred to herein as applicable states.

If there are applicable states in the detection rule 135, the integration unit 114 selects the applicable states from the state model 134 and integrates the selected states into one state. Further, the integration unit 114 selects the applicable states from the detection rule 135 and integrates the selected applicable states into one state.

In Fig. 12, there is one piece of communication information of the state (1) and there are two pieces of communication information of the state (2). That is, the state (1) and the state (2) do not match each other in terms of the number of pieces of communication information.

Therefore, the integration unit 114 does not integrate the state (1) and the state (2) into one state.

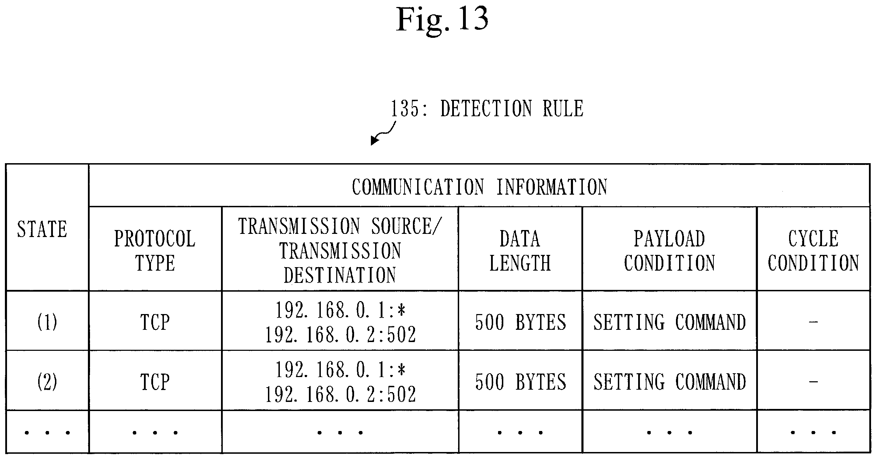

Fig. 13 illustrates an example of the detection rule 135.

In Fig. 13, there is one piece of communication information of the state (1), and there is one piece of communication information of the state (2). That is, the state (1) and the state (2) match each other in terms of the number of pieces of communication information.

Further, the state (1) and the state (2) match each other in terms of the details of communication information.

Therefore, the integration unit 114 integrates the state (1) and the state (2) into one state.

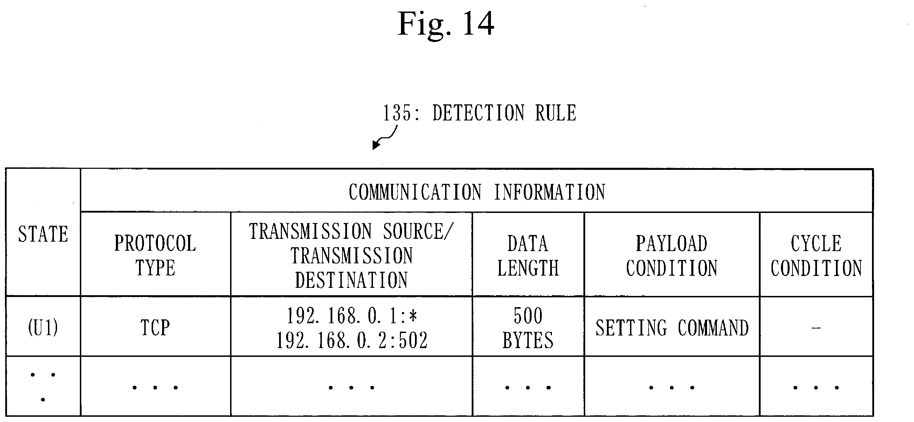

Fig. 14 illustrates the detection rule 135 obtained by optimizing the detection rule 135 of Fig. 13.

A state (U1) signifies a state resulting from integrating the state (1) and the state (2).

The communication information of the state (1) and the communication information of the state (2) are integrated into the communication information of the state (U1).

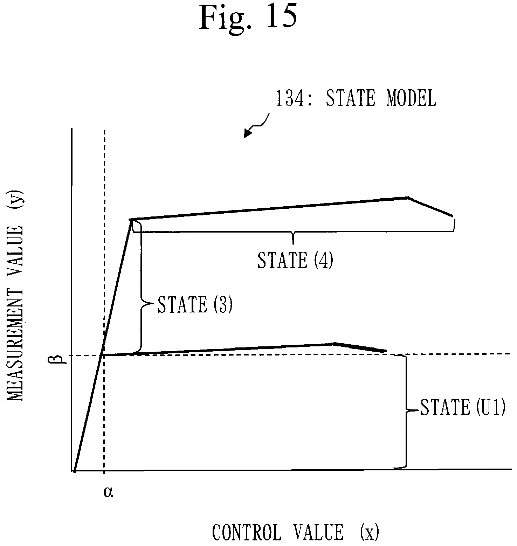

Fig. 15 illustrates the state model 134 obtained by optimizing the state model 134 of Fig. 11.

The range of the state (1) and the range of the state (2) are integrated into the range of the state (U1).

The range of the state (U1) is a range such that the measurement value is less than β.

Referring back to Fig. 7, step S230 will be described.

In step S230, the attack detection unit 115 detects attack data, using the state model 134 and the detection rule 135.

That is, the attack detection unit 115 determines whether new communication data 133 is attack data, using the state model 134 and the detection rule 135.

New communication data 133 in step S230 is communication data 133 that is communicated while step S230 is being performed.

Specifically, the attack detection unit 115 detects communication data 133 of an attack as described below.

First, the attack detection unit 115 selects, from the state model 134, a state corresponding to a measurement value measured in a time period during which the new communication data 133 is communicated.

Next, the attack detection unit 115 selects communication information corresponding to the selected state from the detection rule 135.

Next, the attack detection unit 115 compares the selected communication information with communication information of the new communication data 133.

Then, if the communication information of the new communication data 133 does not match the selected communication information, the attack detection unit 115 determines that the new communication data 133 is attack data.

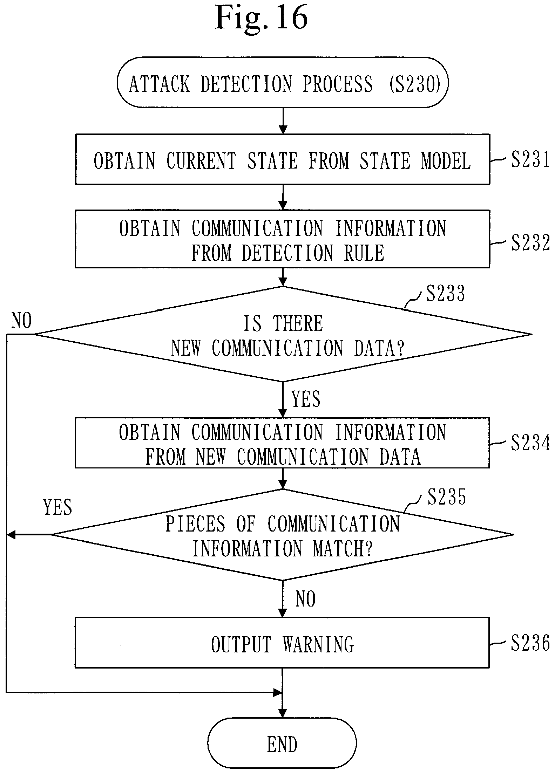

Referring to Fig. 16, a procedure for an attack detection process (S230) will be described.

The attack detection process (S230) is performed repeatedly.

In step S231, the attack detection unit 115 obtains a current state from the state model 134.

Specifically, the attack detection unit 115 obtains the current state as described below.

First, the attack detection unit 115 obtains a pair of current values of a focused type from the storage unit 121. This focused type is the same as the focused type in the generation process (S210) of Fig. 3. That is, this focused type is the focused type used for generating the state model 134. A method for obtaining the pair of current values of the focused type is the same as the method in step S212 (see Fig. 3).

Then, the attack detection unit 115 obtains the current state from the state model 134 based on the pair of current values of the focused type. A method for obtaining the current state is the same as the method in step S214 (see Fig. 3).

In step S232, the attack detection unit 115 obtains communication information from the detection rule 135.

Specifically, the attack detection unit 115 obtains communication information corresponding to the same state as the current state from the detection rule 135.

The communication information obtained in step S232 will be referred to as the communication information of the detection rule 135.

In step S233, the attack detection unit 115 determines whether there is new communication data 133.

New communication data 133 in step S233 is communication data 133 including a time that is after start of the attack detection process (S230).

If there is new communication data 133, the process proceeds to step S234.

If there is no new communication data 133, the attack detection process (S230) ends. Then, the attack detection process (S230) is newly performed.

In step S234, the attack detection unit 115 obtains communication information from the new communication data 133.

The communication information obtained in step S234 will be referred to as the communication information of the new communication data 133.

In step S235, the attack detection unit 115 compares the communication information of the new communication data 133 with the communication information of the detection rule 135.

If the communication information of the new communication data 133 matches the communication information of the detection rule 135, the attack detection process (S230) ends. Then, the attack detection process (S230) is newly performed.

If the communication information of the new communication data 133 does not match the communication information of the detection rule 135, the process proceeds to step S236.

In step S236, the warning unit 116 outputs a warning.

Specifically, the warning unit 116 displays a warning message on the display via the display unit 124. That is, the warning unit 116 inputs the warning message to the display unit 124. Then, the display unit 124 displays the warning message on the display. However, the warning unit 116 may output a warning by a method such as causing a warning sound to be output from a speaker or causing a warning lamp to be turned on.

After step S236, the attack detection process (S230) ends. Then, the attack detection process (S230) is newly performed.

### *** Effects of First Embodiment ***

A cyberattack can be detected without receiving a state notification.

The monitoring control apparatus 100 automatically defines states of the plant 210 based on control values and measurement values. The monitoring control apparatus 100 automatically generates a detection rule 135 in accordance with the definitions of the states.

Therefore, the introduction of the monitoring control apparatus 100 to a system allows a cyberattack to be detected without adding or modifying a function.

The monitoring control apparatus 100 can define the behavior of the plant 210, which changes according to control, as states based on control values and measurement values.

Therefore, highly accurate detection is possible, using finely tuned states in accordance with actual control situations, instead of states based on operational information, such as humans, human operations, or elapsed communication times.

In order to generate a state model 134 and a detection rule 135, the operator only needs to select a focused type.

That is, an attack can be detected without requiring complicated settings by the operator.

The monitoring control apparatus 100 detects an attack based on minimum required detection rules.

Therefore, the monitoring control apparatus 100 does not require high-performance calculation resources and a large number of detection rules.

The monitoring control apparatus 100 defines states, using the state model 134.

This allows not only detection of an attack using communication data 133 but also detection of an anomaly in a control value or a measurement value based on the state model 134.

The monitoring control apparatus 100 determines a state, and applies a detection rule corresponding to the state to communication data 133.

Therefore, even if an attack involving communication in compliance with a communication sequence is performed from a computer taken over by an attacker, this attack can be detected.

The monitoring control apparatus 100 can detect attacks via a network even when the attacks are from various types of terminals other than a remote terminal.

The monitoring control apparatus 100 defines a state based on the relationship between a control value and a measurement value without using a state notification packet.

Therefore, the first embodiment provides countermeasures against attacks such as those falsifying a state notification packet.

### *** Other Configurations ***

An apparatus other than the monitoring control apparatus 100 may function as the attack detection apparatus.

The model generation unit 112 may generate a state model 134 based on one of control data 131 and measurement data 132.

Specifically, the model generation unit 112 generates the state model 134 based on a plurality of measurement values. In this case, the model generation unit 112 divides the plurality of measurement values into groups and defines a state for each of the groups.

Specifically, the model generation unit 112 generates the state model 134 based on a plurality of control values. In this case, the model generation unit 112 divides the plurality of control values into groups and defines a state for each of the groups.

For example, the model generation unit 112 divides the plurality of measurement values or the plurality of control values into groups according to time period.

The rule generation unit 113 may generate a detection rule 135 based on one of control data 131 and measurement data 132.

Specifically, the rule generation unit 113 generates the detection rule 135 based on pieces of communication data 133 communicated by the monitoring target 202 in a time period during which a plurality of measurement values are obtained. In this case, the rule generation unit 113 obtains a state from the state model 134 based on the measurement value of the time when each piece of communication data 133 of the pieces of communication data 133 is obtained. Further, the rule generation unit 113 obtains communication information from each piece of communication data 133. Then, the rule generation unit 113 registers the obtained state and the obtained communication information in the detection rule 135 in association with each other.

Specifically, the rule generation unit 113 generates the detection rule 135 based on pieces of communication data 133 communicated by the monitoring target 202 in a time period during which a plurality of control values are obtained. In this case, the rule generation unit 113 obtains a state from the state model 134 based on the control value of the time when each piece of communication data 133 of the pieces of communication data 133 is obtained. Further, the rule generation unit 113 obtains communication information from each piece of communication data 133. Then, the rule generation unit 113 registers the obtained state and the obtained communication information in the detection rule 135 in association with each other.

### Second Embodiment

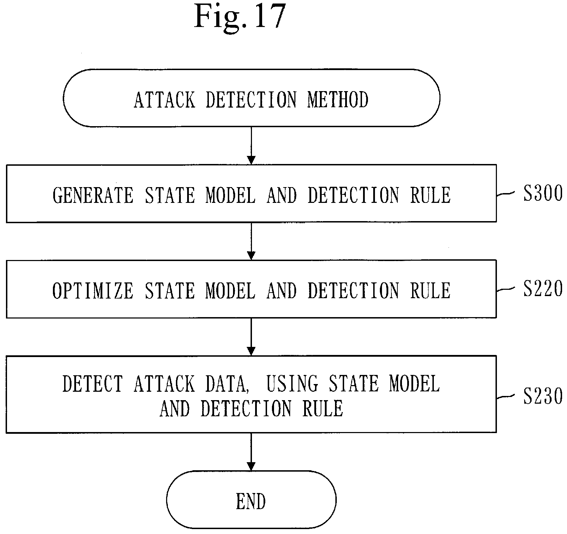

Referring to Figs. 17 to 20, differences from the first embodiment will be mainly described with regard to an embodiment in which a detection rule 135 is generated by a method different from the method in the first embodiment.

### *** Description of Configuration ***

The configuration of the monitoring control system 200 is the same as the configuration in the first embodiment (see Figs. 1 and 2).

The configuration of the monitoring control apparatus 100 is the same as the configuration in the first embodiment (see Fig. 3).

### *** Description of Operation ***

The monitoring control method is the same as the method in the first embodiment (see Figs. 5 and 6).

Referring to Fig. 17, the attack detection method will be described.

In step S300, the model generation unit 112 generates a state model 134 by the same method as the method in the first embodiment.

The rule generation unit 113 generates a detection rule 135 by a method different from the method in the first embodiment.

Specifically, the rule generation unit 113 generates the detection rule 135 as described below.

The rule generation unit 113 determines whether the same communication information as communication information obtained from each piece of communication data 133 exists in a communication information list 136. The communication information list 136 will be described later.

If the same communication information as the communication information obtained from each piece of communication data 133 exists in the communication information list 136, the rule generation unit 113 registers the obtained state and the obtained communication information in the detection rule 135 in association with each other.

Steps S220 and S230 are as described in the first embodiment (see Fig. 7).

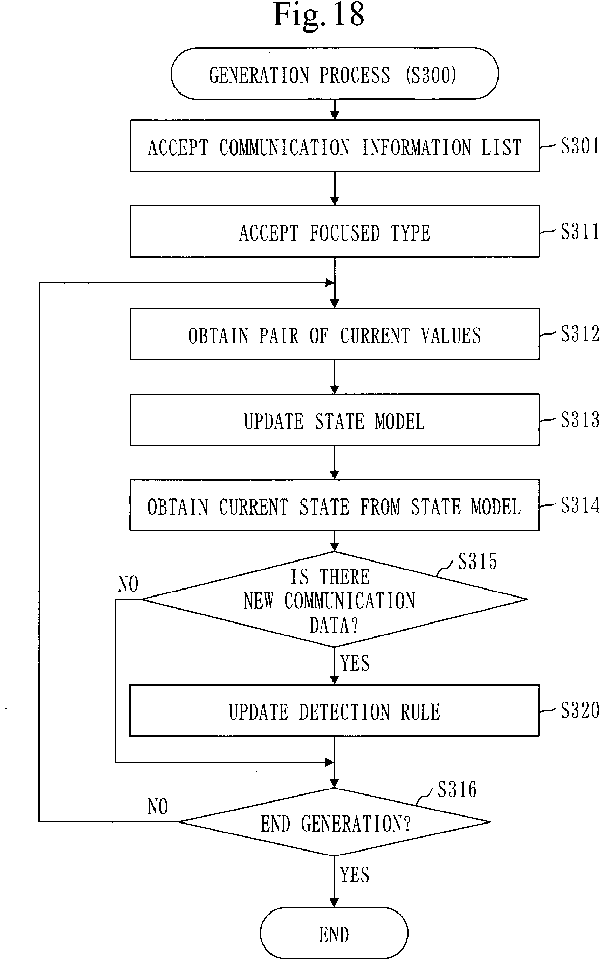

Referring to Fig. 18, a generation process (S300) will be described.

In step S301, an operator generates a communication information list 136, and inputs the generated communication information list 136 to the monitoring control apparatus 100.

The acceptance unit 123 accepts the communication information list 136, and the data management unit 111 stores the communication information list 136 in the storage unit 121.

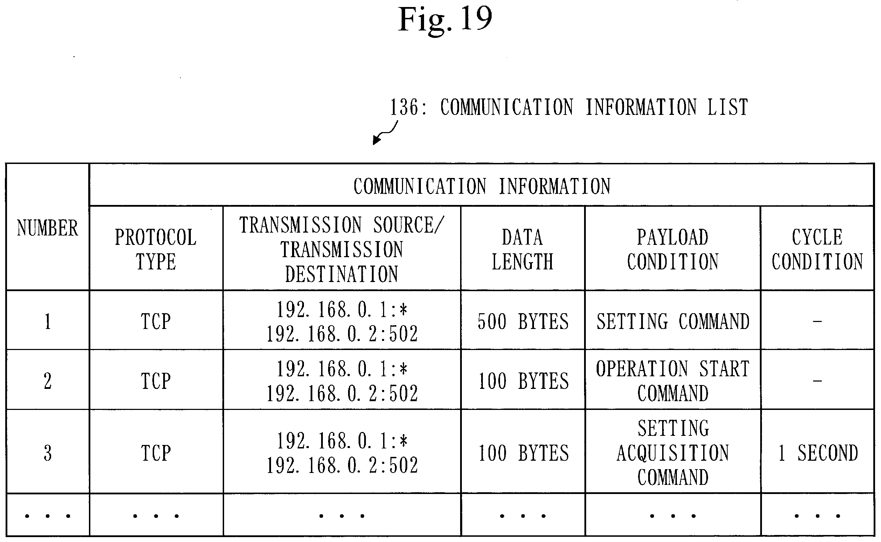

Fig. 19 illustrates an example of the communication information list 136.

The communication information list 136 is a list of communication information of proper communication data 133. That is, the communication information list 136 is a list of proper communication information.

The communication information list 136 is equivalent to data obtained by deleting the state column from the detection rule 135 (see Fig. 12).

In step S311, the acceptance unit 123 accepts a focused type that is input to the monitoring control apparatus 100.

Step S311 is the same as steps S211 in the first embodiment (see Fig. 8).

In step S312, the model generation unit 112 obtains a pair of current values of the focused type from the storage unit 121.

Step S312 is the same as step S212 in the first embodiment (see Fig. 8).

In step S313, the model generation unit 112 updates the state model 134 based on the pair of current values of the focused type.

Step S313 is the same as step S313 in the first embodiment (see Fig. 8).

In step S314, the rule generation unit 113 obtains a current state from the state model 134.

Step S314 is the same as step S214 in the first embodiment (see Fig. 8).

In step S315, the rule generation unit 113 determines whether there is new communication data 133.

Step S315 is the same as step S215 in the first embodiment (see Fig. 8).

If there is new communication data 133, the process proceeds to step S320.

If there is no new communication data 133, the process proceeds to step S316.

In step S320, the rule generation unit 113 updates the detection rule 135 based on the new communication data 133 and the communication information list 136.

A procedure for step S320 will be described later.

In step S316, the model generation unit 112 determines whether to end the generation process (S300).

Step S316 is the same as step S218 in the first embodiment (see Fig. 8).

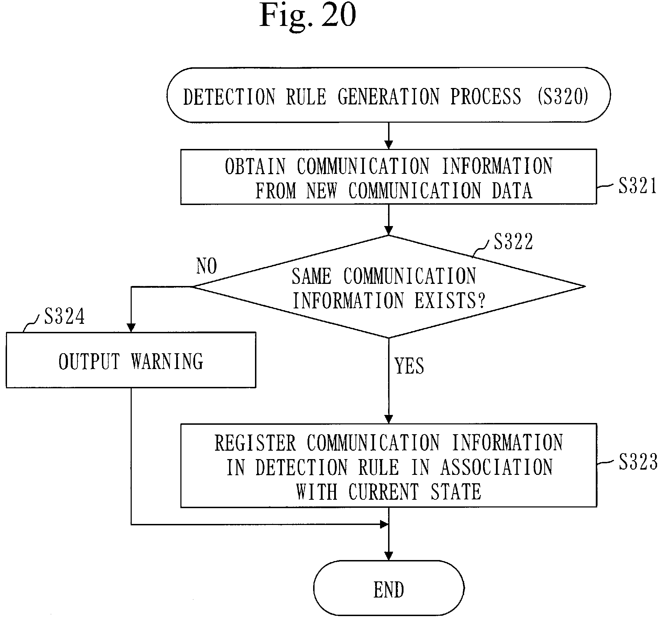

Referring to Fig. 20, a procedure for a detection rule generation process (S320) will be described.

In step S321, the rule generation unit 113 obtains communication information from the new communication data 133.

Specifically, the communication data 133 has a header in which communication information is set. The rule generation unit 113 obtains the communication information from the header of the communication data 133.

The communication information obtained in step S321 will be referred to as the communication information of the new communication data 133.

In step S322, the rule generation unit 113 searches the communication information list 136, so as to determine whether the same communication information as the communication information of the new communication data 133 exists in the communication information list 136.

If the same communication information as the communication information of the new communication data 133 exists in the communication information list 136, the process proceeds to step S323.

If the same communication information as the communication information of the new communication data 133 is not included in the communication information list 136, the process proceeds to step S324.

In step S323, the rule generation unit 113 registers the communication information of the new communication data 133 in the detection rule 135 in association with the current state.

In step S324, the warning unit 116 outputs a warning.

Step S324 is the same as step S236 in the first embodiment (see Fig. 16).

### *** Effects of Second Embodiment ***

The monitoring control apparatus 100 automatically generates a detection rule in accordance with states based on proper communication information. This allows highly accurate detection to be realized.

In addition, the monitoring control apparatus 100 can also detect an attack when generating the detection rule.

### *** Supplementation of Embodiments ***

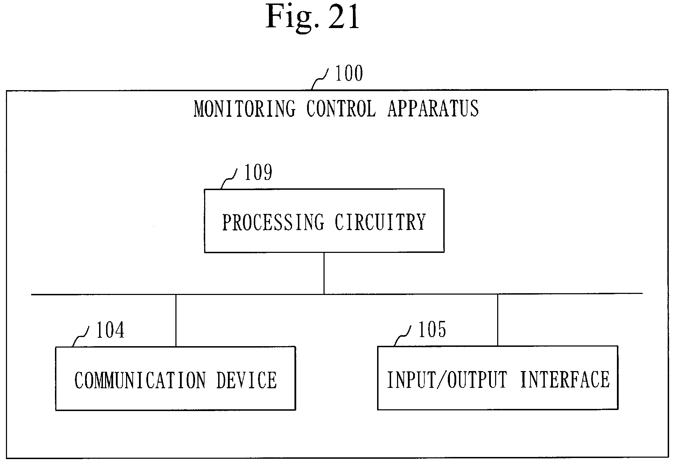

Referring to Fig. 21, a hardware configuration of the monitoring control apparatus 100 will be described.

The monitoring control apparatus 100 includes processing circuitry 109.

The processing circuitry 109 is hardware that realizes the data management unit 111, the model generation unit 112, the rule generation unit 113, the integration unit 114, the attack detection unit 115, the warning unit 116, and the storage unit 121.

The processing circuitry 109 may be dedicated hardware, or may be the processor 101 that executes programs stored in the memory 102.

When the processing circuitry 109 is dedicated hardware, the processing circuitry 109 is, for example, a single circuit, a composite circuit, a programmed processor, a parallel-programmed processor, an ASIC, an FPGA, or a combination thereof.

ASIC is an abbreviation for Application Specific Integrated Circuit, and FPGA is an abbreviation for Field Programmable Gate Array.

The monitoring control apparatus 100 may include a plurality of processing circuits as an alternative to the processing circuitry 109. The plurality of processing circuits divide the role of the processing circuitry 109 among the plurality of processing circuits.

In the monitoring control apparatus 100, some of the functions may be realized by dedicated hardware, and the rest of the functions may be realized by software or firmware.

The processing circuitry 109 may thus be realized by hardware, software, firmware, or a combination thereof.

The embodiments are examples of preferred embodiments, and are not intended to limit the technical scope of the present invention. The embodiments may be implemented partially, or may be implemented in combination. The procedures described using the flowcharts or the like may be suitably changed.

### Reference Signs List

100: monitoring control apparatus, 101: processor, 102: memory, 103: auxiliary storage device, 104: communication device, 105: input/output interface, 109: processing circuitry, 111: data management unit, 112: model generation unit, 113: rule generation unit, 114: integration unit, 115: attack detection unit, 116: warning unit, 121: storage unit, 122: communication unit, 123: acceptance unit, 124: display unit, 131: control data, 132: measurement data, 133: communication data, 134: state model, 135: detection rule, 136: communication information list, 141: plot graph, 142: linear model, 200: monitoring control system, 201: network, 202: monitoring target, 210: plant, 211: controller, 212: field network, 213: field device, 221: information system network, 222: control system network

## Claims

1. An attack detection apparatus (100) comprising:
a model generation unit (112) configured to generate, based on a plurality of measurement values obtained by measuring a monitoring target, a state model that indicates a measurement value in each state of the monitoring target;
a rule generation unit (113) configured to generate a detection rule that indicates communication information in each state of the monitoring target, based on pieces of communication data communicated by the monitoring target in a time period during which the plurality of measurement values are obtained; and
an attack detection unit (115) configured to determine whether new communication data is attack data, using the state model and the detection rule,
wherein the rule generation unit (113) acquires a state from the state model, based on a measurement value of a time when each piece of communication data of the pieces of communication data is obtained, acquires communication information from each piece of communication data, and registers the acquired state and the acquired communication information in the detection rule in association with each other.

2. The attack detection apparatus (100) according to claim 1,
wherein the model generation unit (112) generates the state model by dividing the plurality of measurement values into groups and defining a state for each of the groups.

3. The attack detection apparatus (100) according to claim 1,
wherein the model generation unit (112) generates the state model based on the plurality of measurement values and a plurality of control values for the monitoring target, and
wherein the rule generation unit (113) generates the detection rule based on pieces of communication data communicated by the monitoring target in a time period during which the plurality of control values and the plurality of measurement values are obtained.

4. The attack detection apparatus (100) according to claim 3,
wherein the model generation unit (112) generates the state model by dividing a plurality of pairs of values obtained from the plurality of control values and the plurality of measurement values into groups and defining a state for each of the groups.

5. The attack detection apparatus (100) according to any one of claims 1 to 4,
wherein when same communication information as the acquired communication information exists in a communication information list, the rule generation unit (113) registers the acquired state and the acquired communication information in the detection rule in association with each other.

6. A computer-implemented attack detection method comprising:
generating, based on a plurality of measurement values obtained by measuring a monitoring target, a state model that indicates a measurement value in each state of the monitoring target, by a model generation unit (112);
generating a detection rule that indicates communication information in each state of the monitoring target, based on pieces of communication data communicated by the monitoring target in a time period during which the plurality of measurement values are obtained, by a rule generation unit (113); and
determining whether new communication data is attack data, using the state model and the detection rule, by an attack detection unit (115),
wherein the rule generation unit (113) acquires a state from the state model, based on a measurement value of a time when each piece of communication data of the pieces of communication data is obtained, acquires communication information from each piece of communication data, and registers the acquired state and the acquired communication information in the detection rule in association with each other.

7. An attack detection program comprising instructions which, when the program is executed by a computer, cause the computer to execute:
a model generation process to generate, based on a plurality of measurement values obtained by measuring a monitoring target, a state model that indicates a measurement value in each state of the monitoring target;
a rule generation process to generate a detection rule that indicates communication information in each state of the monitoring target, based on pieces of communication data communicated by the monitoring target in a time period during which the plurality of measurement values are obtained; and
an attack detection process to determine whether new communication data is attack data, using the state model and the detection rule,
wherein the rule generation process acquires a state from the state model, based on a measurement value of a time when each piece of communication data of the pieces of communication data is obtained, acquires communication information from each piece of communication data, and registers the acquired state and the acquired communication information in the detection rule in association with each other.

## Patentansprüche

1. Angriffsdetektionsvorrichtung (100), die Folgendes umfasst:
eine Modellgenerierungseinheit (112), die konfiguriert ist, um basierend auf einer Vielzahl von Messwerten, die durch Messen eines Überwachungsziels erhalten wurden, ein Zustandsmodell zu generieren, das einen Messwert in jedem Zustand des Überwachungsziels angibt;
eine Regelgenerierungseinheit (113), die konfiguriert ist, um basierend auf Teilen von Kommunikationsdaten, die durch das Überwachungsziel in einem Zeitraum kommuniziert wurden, in dem die Vielzahl von Messwerten erhalten werden, eine Detektionsregel zu generieren, welche Kommunikationsinformationen in jedem Zustand des Überwachungsziels angibt; und
eine Angriffsdetektionseinheit (115), die konfiguriert ist, um unter Verwendung des Zustandsmodells und der Detektionsregel zu bestimmen, ob neue Kommunikationsdaten Angriffsdaten sind,
wobei die Regelgenerierungseinheit (113) basierend auf einem Messwert eines Zeitpunkts, zu dem jeder Teil von Kommunikationsdaten von den Teilen von Kommunikationsdaten erhalten wird, einen Zustand von dem Zustandsmodell erfasst, Kommunikationsinformationen von jedem Teil von Kommunikationsdaten erfasst und den erfassten Zustand und die erfassten Kommunikationsinformationen in Zuordnung zueinander in der Detektionsregel registriert.

2. Angriffsdetektionsvorrichtung (100) nach Anspruch 1,
wobei die Modellgenerierungseinheit (112) das Zustandsmodell durch Aufteilen der Vielzahl von Messwerten in Gruppen und Definieren eines Zustands für jede der Gruppen generiert.

3. Angriffsdetektionsvorrichtung (100) nach Anspruch 1,
wobei die Modellgenerierungseinheit (112) das Zustandsmodell basierend auf der Vielzahl von Messwerten und einer Vielzahl von Steuerwerten für das Überwachungsziel generiert und
wobei die Regelgenerierungseinheit (113) die Detektionsregel basierend auf Teilen von Kommunikationsdaten generiert, die durch das Überwachungsziel in einem Zeitraum kommuniziert wurden, in dem die Vielzahl von Steuerwerten und die Vielzahl von Messwerten erhalten werden.

4. Angriffsdetektionsvorrichtung (100) nach Anspruch 3,
wobei die Modellgenerierungseinheit (112) das Zustandsmodell durch Aufteilen einer Vielzahl von Wertpaaren, die aus der Vielzahl von Steuerwerten und der Vielzahl von Messwerten erhalten wurden, in Gruppen und durch Definieren eines Zustands für jede der Gruppen generiert.

5. Angriffsdetektionsvorrichtung (100) nach einem der Ansprüche 1 bis 4, wobei, wenn dieselben Kommunikationsinformationen wie die erfassten Kommunikationsinformationen in einer Kommunikationsinformationenliste vorliegen, die Regelgenerierungseinheit (113) den erfassten Zustand und die erfassten Kommunikationsinformationen in der Detektionsregel in Zuordnung zueinander registriert.

6. Computerimplementiertes Angriffsdetektionsverfahren, das Folgendes umfasst:
das Generieren basierend auf einer Vielzahl von Messwerten, die durch Messen eines Überwachungsziels erhalten wurden, eines Zustandsmodells, das einen Messwert in jedem Zustand des Überwachungsziels angibt, durch eine Modellgenerierungseinheit (112);
das Generieren einer Detektionsregel, die Kommunikationsinformationen in jedem Zustand des Überwachungsziels angibt, basierend auf Teilen von Kommunikationsdaten, die durch das Überwachungsziel in einem Zeitraum kommuniziert wurden, in dem die Vielzahl von Messwerten erhalten wird, durch eine Regelgenerierungseinheit (113); und
das Bestimmen, ob neue Kommunikationsdaten Angriffsdaten sind, unter Verwendung des Zustandsmodells und der Detektionsregel durch eine Angriffsdetektionseinheit (115),
wobei die Regelgenerierungseinheit (113) basierend auf einem Messwert eines Zeitpunkts, zu dem jeder Teil von Kommunikationsdaten von den Teilen von Kommunikationsdaten erhalten wird, einen Zustand von dem Zustandsmodell erfasst, Kommunikationsinformationen von jedem Teil von Kommunikationsdaten erfasst und den erfassten Zustand und die erfassten Kommunikationsinformationen in der Detektionsregel in Zuordnung zueinander registriert.

7. Angriffsdetektionsprogramm, umfassend Befehle, die, wenn das Programm durch einen Computer ausgeführt wird, bewirken, dass der Computer Folgendes ausführt:
einen Modellgenerierungsvorgang zum Generieren eines Zustandsmodells, das einen Messwert in jedem Zustand des Überwachungsziels angibt, basierend auf einer Vielzahl von Messwerten, die durch Messen eines Überwachungsziels erhalten wurden;
einen Regelgenerierungsvorgang zum Generieren einer Detektionsregel, die Kommunikationsinformationen in jedem Zustand des Überwachungsziels angibt, basierend auf Teilen von Kommunikationsdaten, die durch das Überwachungsziel in einem Zeitraum kommuniziert wurden, in dem die Vielzahl von Messwerten erhalten werden; und
einen Angriffsdetektionsvorgang zum Bestimmen, ob neue Kommunikationsdaten Angriffsdaten sind, unter Verwendung des Zustandsmodells und der Detektionsregel,
wobei der Regelgenerierungsvorgang basierend auf einem Messwert eines Zeitpunkts, zu dem jeder Teil von Kommunikationsdaten von den Teilen von Kommunikationsdaten erhalten wird, einen Zustand von dem Zustandsmodell erfasst, Kommunikationsinformationen von jedem Teil von Kommunikationsdaten erfasst und den erfassten Zustand und die erfassten Kommunikationsinformationen in der Detektionsregel in Zuordnung zueinander registriert.

## Revendications

1. Appareil de détection d'attaque (100) comprenant :
une unité de génération de modèle (112) configurée pour générer, sur la base d'une pluralité de valeurs de mesure obtenues en mesurant une cible de surveillance, un modèle d'état qui indique une valeur de mesure dans chaque état de la cible de surveillance ;
une unité de génération de règle (113) configurée pour générer une règle de détection qui indique des informations de communication dans chaque état de la cible de surveillance, sur la base d'éléments de données de communication communiqués par la cible de surveillance dans une période de temps pendant laquelle la pluralité de valeurs de mesure sont obtenues ; et
une unité de détection d'attaque (115) configurée pour déterminer si de nouvelles données de communication sont ou non des données d'attaque, en utilisant le modèle d'état et la règle de détection,
dans lequel l'unité de génération de règle (113) acquiert un état à partir du modèle d'état, sur la base d'une valeur de mesure d'un temps où chaque élément de données de communication des éléments de données de communication est obtenu, acquiert des informations de communication à partir de chaque élément de données de communication, et enregistre l'état acquis et les informations de communication acquises dans la règle de détection en association les uns avec les autres.

2. Appareil de détection d'attaque (100) selon la revendication 1,
dans lequel l'unité de génération de modèle (112) génère le modèle d'état en divisant la pluralité de valeurs de mesure en groupes et en définissant un état pour chacun des groupes.

3. Appareil de détection d'attaque (100) selon la revendication 1,
dans lequel l'unité de génération de modèle (112) génère le modèle d'état sur la base de la pluralité de valeurs de mesure et d'une pluralité de valeurs de commande pour la cible de surveillance, et
dans lequel l'unité de génération de règle (113) génère la règle de détection sur la base d'éléments de données de communication communiqués par la cible de surveillance dans une période de temps pendant laquelle la pluralité de valeurs de commande et la pluralité de valeurs de mesure sont obtenues.

4. Appareil de détection d'attaque (100) selon la revendication 3,
dans lequel l'unité de génération de modèle (112) génère le modèle d'état en divisant une pluralité de paires de valeurs obtenues à partir de la pluralité de valeurs de commande et de la pluralité de valeurs de mesure en groupes, et en définissant un état pour chacun des groupes.

5. Appareil de détection d'attaque (100) selon l'une quelconque des revendications 1 à 4,
dans lequel lorsque des informations de communication identiques aux informations de communication acquises existent dans une liste d'informations de communication, l'unité de génération de règle (113) enregistre l'état acquis et les informations de communication acquises dans la règle de détection en association les uns avec les autres.

6. Procédé de détection d'attaque mis en œuvre par ordinateur, comprenant les étapes consistant à :
générer, sur la base d'une pluralité de valeurs de mesure obtenues en mesurant une cible de surveillance, un modèle d'état qui indique une valeur de mesure dans chaque état de la cible de surveillance, par une unité de génération de modèle (112) ;
générer une règle de détection qui indique des informations de communication dans chaque état de la cible de surveillance, sur la base d'éléments de données de communication communiqués par la cible de surveillance dans une période de temps pendant laquelle la pluralité de valeurs de mesure sont obtenues, par l'intermédiaire d'une unité de génération de règle (113) ; et
déterminer si de nouvelles données de communication sont ou non des données d'attaque, en utilisant le modèle d'état et la règle de détection, par une unité de détection d'attaque (115) ,
dans lequel l'unité de génération de règle (113) acquiert un état à partir du modèle d'état, sur la base d'une valeur de mesure d'un temps où chaque élément de données de communication des éléments de données de communication est obtenu, acquiert des informations de communication à partir de chaque élément de données de communication, et enregistre l'état acquis et les informations de communication acquises dans la règle de détection en association les uns avec les autres.

7. Programme de détection d'attaque comprenant des instructions qui, lorsque le programme est exécuté par un ordinateur, amènent l'ordinateur à exécuter :
un processus de génération de modèle pour générer, sur la base d'une pluralité de valeurs de mesure obtenues en mesurant une cible de surveillance, un modèle d'état qui indique une valeur de mesure dans chaque état de la cible de surveillance ;
un processus de génération de règle pour générer une règle de détection qui indique des informations de communication dans chaque état de la cible de surveillance, sur la base d'éléments de données de communication communiqués par la cible de surveillance dans une période de temps pendant laquelle la pluralité de valeurs de mesure sont obtenues ; et
un processus de détection d'attaque pour déterminer si de nouvelles données de communication sont ou non des données d'attaque, en utilisant le modèle d'état et la règle de détection,
dans lequel le processus de génération de règle acquiert un état à partir du modèle d'état, sur la base d'une valeur de mesure d'un temps où chaque élément de données de communication des éléments de données de communication est obtenu, acquiert des informations de communication à partir de chaque élément de données de communication, et enregistre l'état acquis et les informations de communication acquises dans la règle de détection en association les uns avec les autres.
